# EUROPEAN PATENT SPECIFICATION

(11) **EP 4 711 989 B1**
(45) Date of publication and mention of the grant of the patent: **14.10.2026**
(21) Application number: 25191150.9
(22) Date of filing: 23.07.2025
(51) Int. Cl.: G06N 10/70, H04L 9/08

(54) **METHOD FOR TRANSMITTING QUANTUM STATE, METHOD FOR VERIFYING QUANTUM STATE, AND SYSTEM THEREFOR**
VERFAHREN ZUR ÜBERTRAGUNG EINES QUANTENZUSTANDS, VERFAHREN ZUR ÜBERPRÜFUNG EINES QUANTENZUSTANDS UND ZUGEHÖRIGES SYSTEM
PROCÉDÉ DE TRANSMISSION D'ÉTAT QUANTIQUE, PROCÉDÉ DE VÉRIFICATION D'ÉTAT QUANTIQUE ET SYSTÈME ASSOCIÉ

(30) Priority: 06.09.2024 KR 20240121632
(43) Date of publication of application: 18.03.2026
(73) Proprietor: Korea Institute of Science & Technology Information, Daejeon 34141 (KR)
(72) Inventor: Sohn, Il Kwon, DAEJEON 34191 (KR); Kim, Bo Seon, SEOUL 07435 (KR); Bae, Kwang Il, DAEJEON 34 141 (KR); Song, Woo Yeong, INCHEON 21980 (KR); Lee, Chan Kyun, DAEJEON 34199 (KR); Lee, Won Hyuk, SEJONGI-SI 30062 (KR)
(74) Representative: GLAWE DELFS MOLL

(56) References cited:
- I. K. SOHN ET AL: "Error-correctable efficient quantum homomorphic encryption using Calderbank-Shor-Steane codes", ARXIV:2401.08059V2, 27 January 2024 (2024-01-27), XP093359783, Retrieved from the Internet <URL:https://arxiv.org/abs/2401.08059v2> [retrieved on 20240130], DOI: 10.48550/arXiv.2401.08059
- MARCO CHIANI ET AL: "Piggybacking on quantum streams", ARXIV.ORG, CORNELL UNIVERSITY LIBRARY, 201 OLIN LIBRARY CORNELL UNIVERSITY ITHACA, NY 14853, 25 May 2020 (2020-05-25), XP081683252

## Description

### BACKGROUND

### 1. Field

The present disclosure relates to a method for transmitting a quantum state, and more particularly, to methods for transmitting a quantum state and verifying tampering of a quantum state so that such tampering can be easily verified in quantum communication.

### 2. Description of the Related Art

A quantum network refers to communication that connects quantum devices located at distant locations, such as quantum computers, using both quantum and classical links. To ensure proper communication over such long distances, security is a key requirement. To achieve security, it is essential to efficiently and securely transmit arbitrary quantum states over long distances.

Quantum teleportation is a quantum protocol for transmitting arbitrary quantum states using entangled quantum states and quantum and classical links. Quantum teleportation requires a pair of entangled states pre-shared between a transmitting node and a receiving node. When the distance between the transmitting and receiving nodes is long, entanglement swapping is necessary to extend the transmission range.

In linear optical settings, entanglement swapping has a 50% success probability for physical Bell State Measurement (BSM). Accordingly, as the distance and the number of nodes increase, the success probability decreases exponentially.

To alleviate this, logical Bell State Measurement using Quantum Error Correction Codes (QECCs) can be performed, and the success probability can be improved based on code length n_{bsm}. However, this method increases overhead. In particular, when purification is considered, the overhead may further increase. Furthermore, when the distance between the transmitting and receiving nodes is substantial and multiple stages of entanglement swapping and purification are required, the overhead may increase exponentially in proportion to the number of relay nodes.

Therefore, there is a demand for a technology that can suppress overhead increase and enhance the security of quantum channels.

On 27 January 2024, Sohn et al. (Error-correctable efficient quantum homomorphic encryption using Calderbank-Shor-Steane codes; arXiv:2401.08059v2; doi:10.48550/arXiv.2401.08059) disclosed an efficient quantum homomorphic encryption based on quantum error correction codes, using a single encoding process to accomplish encryption and encoding, wherein a longer quantum error-correcting code simultaneously improves the security and error correction capabilities.

On 25 May 2020, Chiani et al. (Piggybacking on quantum streams; arXiv:2005.12215v1; doi:10.48550/arXiv.2005.12215) disclosed how to piggyback classical information on a stream of qubits protected by quantum error correcting codes, wherein the piggyback channel is created by introducing intentional errors corresponding to a controlled sequence of syndromes that, when quantum noise is present, are further protected by classical error correcting codes according to a performance-delay trade-off.

### SUMMARY

The invention is defined in the claims.

It should be noted that the effects of the present disclosure are not limited to those described above, and other effects of the present disclosure will be apparent from the following description.

### BRIEF DESCRIPTION OF THE DRAWINGS

The above and other aspects and features of the present disclosure will become more apparent by describing exemplary embodiments thereof in detail with reference to the attached drawings, in which:
FIG. 1 is a diagram illustrating a quantum communication system according to an embodiment of the present disclosure;
FIG. 2 is a signal processing diagram for explaining how a quantum state is transmitted and verified in a quantum communication system according to an embodiment of the present disclosure;
FIG. 3 is a flowchart for explaining a method in which a transmitting node generates state information and transmits it to a receiving node according to an embodiment of the present disclosure;
FIG. 4 is a flowchart for explaining a method in which a transmitting node transmits data for verification to a receiving node according to an embodiment of the present disclosure;
FIG. 5 is a flowchart for explaining a method for verifying a quantum state at a receiving node according to an embodiment of the present disclosure;
FIG. 6 is a diagram illustrating a quantum communication system for long-distance transmission according to an embodiment of the present disclosure; and
FIG. 7 is a diagram illustrating an exemplary hardware configuration in which a computing system can be implemented in various embodiments.

### DETAILED DESCRIPTION

Hereinafter, preferred embodiments of the present disclosure will be described with reference to the attached drawings. Advantages and features of the present disclosure and methods of accomplishing the same may be understood more readily by reference to the following detailed description of preferred embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, while the invention is defined by the appended claims.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the gist of the present disclosure, the detailed description thereof will be omitted.

Unless otherwise defined, all terms used in the present specification (including technical and scientific terms) may be used in a sense that can be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), can be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

The terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof.

Embodiments of the present disclosure will hereinafter be described in detail with reference to the accompanying drawings.

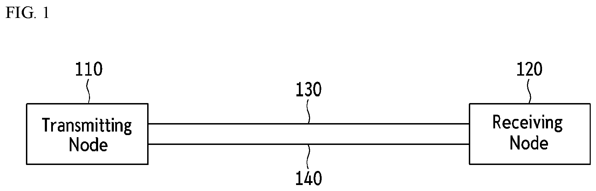

FIG. 1 is a diagram illustrating a quantum communication system according to an embodiment of the present disclosure.

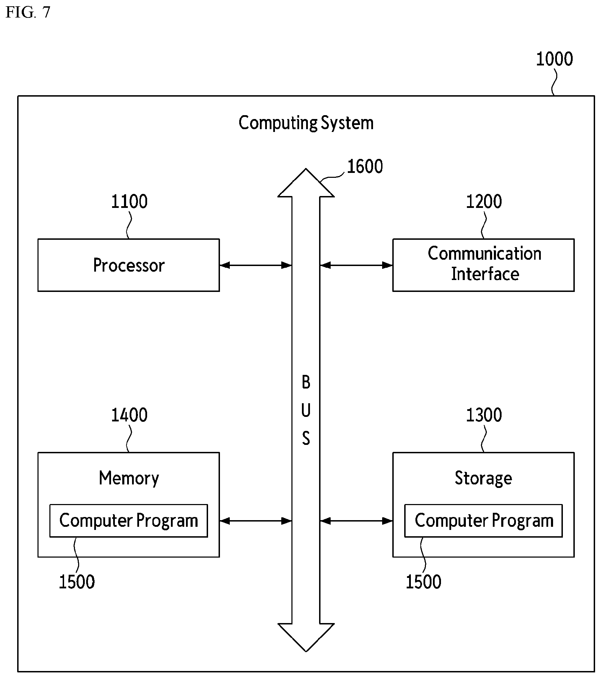

Referring to FIG. 1, the quantum communication system includes a transmitting node 110 and a receiving node 120. Here, each of the transmitting and receiving nodes 110 and 120 are a computing device that includes at least one processor and memory. For example, each of the transmitting and receiving nodes 110 and 120 may be a computing device that includes components like those depicted in FIG. 7.

A plurality of communication channels are formed between the transmitting and receiving nodes 110 and 120. In one embodiment, a classical channel 130 and a quantum channel 140 are created between the transmitting and receiving nodes 110 and 120. The classical channel 130 is a verified communication channel, and data transmitted through the classical channel 130 is considered reliable. The quantum channel 140 is a channel in which significant loss and noise occur, and data transmitted through the quantum channel 140 is considered less reliable compared to the classical channel 130.

The transmitting node 110 transmits a quantum state into which an uncorrectable error *Eᵤₙ* has been injected to the receiving node 120. The transmitting node 110 generates a second quantum state using a first quantum state and a dummy state, encodes the generated second quantum state, and injects the uncorrectable error *Eᵤₙ* into the encoded second quantum state to generate a third quantum state. Thereafter, the transmitting node 110 transmits the generated third quantum state to the receiving node 120. The transmitting node 110 transmits data necessary for quantum state verification to the receiving node 120.

The receiving node 120 performs a verification process on the quantum state received from the transmitting node 110. Here, the verification of a quantum state may include at least one of verifying whether the quantum state has been tampered with due to an external attack and verifying whether the quantum channel 140 is in good condition. The receiving node 120 receives a quantum state and the uncorrectable error *Eᵤₙ* from the transmitting node 110, and obtains a syndrome by applying the uncorrectable error *Eᵤₙ* to the received quantum state. In addition, the receiving node 120 determines whether the obtained syndrome matches a predetermined syndrome, and performs a verification process on the received quantum state.

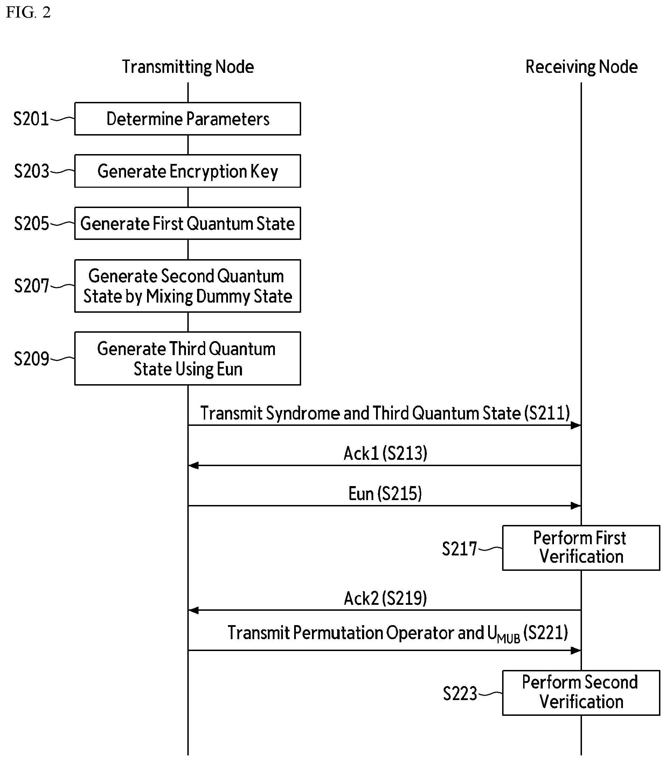

A method will hereinafter be described in which the transmitting node 110 transmits a quantum state to the receiving node 120 and the receiving node 120 verifies the quantum state, with reference to FIG. 2.

FIG. 2 is a signal processing diagram for explaining a method in which a quantum state is transmitted and verified in a quantum communication system according to an embodiment of the present disclosure.

Referring to FIG. 2, the transmitting node 110 may measure a bit error rate of the quantum channel 140 and determine various parameters to be applied to Quantum Error Correction Code (QECC) based on the measured bit error rate (S201). For example, the transmitting node 110 may determine a maximum number of correctable errors *t* by QECC, a total number *n* of qubits used for error correction, a number k of logical qubits that actually carry information, and a code distance d that can detect and correct error codes.

Thereafter, the transmitting node 110 may generate a plurality of encryption keys (S203). For example, the transmitting node **110** may generate a plurality of encryption keys with a predetermined number of bits. The transmitting node **110** may generate four encryption keys, for example, first, second, third, and fourth encryption keys. Some of the four encryption keys may have the same number of bits, and all the four encryption keys may have different numbers of bits. **In** one embodiment, each of the first through third encryption keys may have the same length (e.g., a length of *k* - *k'* bits) as a dummy state to be described later, and the fourth encryption key may be longer than the first through third encryption keys. These four encryption keys may be used in generating at least one of first through third quantum states to be described below.

Thereafter, the transmitting node **110** may generate a first quantum state (S205). **In** one embodiment, the transmitting node **110** may generate arbitrary *k'*-qubit information as a first quantum state |*ψ*'〉. The arbitrary k'-qubit information, i.e., the first quantum state |*ψ*'〉, may be expressed as Equation 1 below. [Equation 1] $\left|ψ′\right〉 = {\sum }_{i}^{{2}^{k ′}} {c}_{i} \left|{m}_{i}\right〉$

Here, *mᵢ* denotes a computational basis state, and *cᵢ* denotes a complex amplitude associated with the computational basis state *mᵢ.*

Thereafter, to prevent an external attack, the transmitting node 110 may obtain a dummy state related to mutually unbiased bases (MUBs) and generate a second quantum state by randomly interspersing the obtained dummy state with the first quantum state (S207). In one embodiment, the dummy state may be pre-generated and stored in the transmitting node 110. In some embodiments, when a quantum state to be transmitted is generated, the transmitting node 110 may randomly generate a dummy state of a predetermined length.

In one embodiment, the transmitting node 110 may randomly mix a first group of bits forming the dummy state and a second group of bits forming the first quantum state, thereby interspersing the dummy state randomly into the first quantum state to generate the second quantum state. For example, the transmitting node 110 may randomly intersperse a dummy state |D), which has a length of *k - k'* and is associated with two state sets {|0〉, |1)} and {|+〉, |-〉} into the first quantum state |*ψ*'〉 based on MUBs arranged at random positions.

The dummy state |*D*〉 may be expressed by Equation 2 below. [Equation 2] $\left|D\right〉 = {⊗}_{i = 1}^{k - k ′} {X}^{{κ}_{i}^{1}} {Z}^{{κ}_{i}^{2}} {H}^{{κ}_{i}^{3}} \left|0\right〉 = {U}_{MUB} {\left|0\right〉}^{⊗ k - k ′}$

Here, *X* and Z are Pauli operators, *H* is a Hadamard operator, ${X}^{{k}_{i}^{1}} , {Z}^{{k}_{i}^{2}}$, and ${H}^{{k}_{i}^{3}}$ are operators that are applied when their corresponding bits are 1, but act as identity operators when their corresponding bits are 0, and *U_{MUB}* is an encoding operator for encoding zero auxiliary states into mutually unbiased states.

Thereafter, the transmitting node 110 encodes the second quantum state using QECC and generates the third quantum state by injecting the uncorrectable error *Eᵤₙ* into the encoded second quantum state (S209). Here, the uncorrectable error *Eᵤₙ* may be a bit or a bit string that is not corrected even when using QECC. Injecting the uncorrectable error *Eᵤₙ* into the second quantum state may involve performing an operation between one or more bits of the uncorrectable error *Eᵤₙ* and multiple bits of the second quantum state through a specific operator. In this case, the third quantum state may be generated as a result of the operation.

The transmitting node 110 encodes the second quantum state using various parameters applied to QECC. For example, the transmitting node 110 may encode the second quantum state based on the total number *n* of qubits used for error correction, the number *k* of logical qubits that actually carry information, and the code distance d for detecting and correcting error codes.

An n-qubit state |*ψ*〉 for QECC encoding based on *[[n, k, d]]* may be expressed as Equation 3 below. [Equation 3] $\begin{matrix}\left|ψ\right〉 & = \left({P}_{{κ}^{4}}⊗{I}^{⊗ n - k}\right) \left|ψ′\right〉 {U}_{MUB} {\left|0\right〉}^{⊗ k - k ′} {\left|0\right〉}^{⊗ n - k} \\ & = \left({P}_{{κ}^{4}}⊗{I}^{⊗ n - k}\right) \left({I}^{⊗ k ′}⊗{U}_{MUB}⊗{I}^{⊗ n - k}\right) \left|ψ′\right〉 {\left|0\right〉}^{⊗ n - k ′} \\ & = {U}_{c} \left|ψ′\right〉 {\left|0\right〉}^{⊗ n - k ′}\end{matrix}$

Here, *P*_{*k*₄} is an operator that permutes the qubits of the dummy state |D).

The transmitting node 110 may encode the n-qubit state |*ψ*〉 into a logical state using a QECC encoding operator *U_{E}.* The encoded logical state, i.e., |*ψ*〉*_{L}*, may be expressed as Equation 4 below. The encoded logical state |*ψ*〉*_{L}* in Equation 4 may be the encoded second quantum state. [Equation 4] ${\left|ψ\right〉}_{L} = {U}_{E} \left|ψ\right〉$

Thereafter, the transmitting node 110 injects the uncorrectable error *Eᵤₙ*, which cannot be corrected even by QECC, into the encoded second quantum state, i.e., |*ψ*〉*_{L}*. For example, the uncorrectable error *Eᵤₙ* may include a randomly selected Pauli error operator. In this case, an operation may be performed based on the Pauli error operator and the encoded second quantum state |*ψ*〉*_{L}*, and as a result of the operation, the third quantum state may be generated. The uncorrectable error *Eᵤₙ* may serve to enhance security against an external attack such as an intercept attack or random attack.

When the third quantum state is generated by injecting the uncorrectable error *Eᵤₙ* into the encoded second quantum state |*ψ*〉*_{L}*, the third quantum state may be understood as being encrypted based on the uncorrectable error *Eᵤₙ.*

The encoded and encrypted (i.e., Eᵤₙ-injected) third quantum state, i.e., |*ψ*〉*_{E}*, may be expressed as Equation 5 below. [Equation 5] ${\left|ψ\right〉}_{E} = {E}_{un} {\left|ψ\right〉}_{L}$

Thereafter, the transmitting node 110 calculates a syndrome s of the uncorrectable error *Eᵤₙ*, and transmits the third quantum state |*ψ*〉*_{E}* and the syndrome s to the receiving node 120 (S211). The transmitting node 110 transmits the third quantum state |*ψ*〉*_{E}* via the quantum channel 140 and transmits the syndrome s via the classical channel 130.

Thereafter, in response to receipt of the third quantum state |*ψ*〉*_{E}*, the receiving node 120 extracts a syndrome from the third quantum state |*ψ*〉*_{E}* and determines whether the extracted syndrome matches the syndrome s received from the transmitting node 110. If the extracted syndrome is determined to match the received syndrome s, the receiving node 120 determines that the channel used is normal. Here, the channel determined to be normal may be the quantum channel 140.

If the channel is determined to be normal, the receiving node 120 transmits a first acknowledgment message Ack1 to the transmitting node 110 to indicate that third quantum state |*ψ*〉*_{E}* has been received normally (S213).

Conversely, if the extracted syndrome is determined as not being a match for the received syndrome s, the receiving node 120 determines that the channel used is abnormal.
Here, the channel determined to be abnormal may be an unstable quantum channel 140 due to excessive noise.

If the channel is determined to be abnormal, the receiving node 120 performs an error correction process on the third quantum state |*ψ*〉*_{E}* based on a syndrome s received via the classical channel 130. If the error correction process has succeeded or the channel is determined to be normal, the receiving node 120 transmits the first acknowledgment message Ack1 to the transmitting node 110.

Thereafter, in response to receipt of the first acknowledgment message Ack1, the transmitting node 110 transmits the uncorrectable error *Eᵤₙ* to the receiving node 120 (S215).
In one embodiment, the transmitting node 110 may transmit the uncorrectable error *Eᵤₙ* via the classical channel 130.

Thereafter, the receiving node 120 performs a first verification process on the third quantum state |*ψ*〉*_{E}* by applying the uncorrectable error *Eᵤₙ* to the third quantum state |*ψ*〉*_{E}* and performing first syndrome extraction with the uncorrectable error *Eᵤₙ* applied (S217). The receiving node 120 determines whether a first syndrome extracted from the third quantum state |*ψ*〉*_{E}* with the uncorrectable error *Eᵤₙ* applied has predetermined values and perform the first verification process on the third quantum state |*ψ*〉*_{E}*. The receiving node 120 performs the first verification process by determining whether the first syndrome matches a second syndrome composed of the predetermined values. If both the third quantum state |*ψ*〉*_{E}* and the uncorrectable error *Eᵤₙ* are not tampered with, the first syndrome matches the second syndrome composed of the predetermined values.

For example, if the first syndrome matches the second syndrome, which is composed of all zeros, the receiving node 120 may determine that the first verification process is successful. On the other hand, if the first syndrome does not match the second syndrome, the receiving node 120 may determine that the first verification process for the third quantum state |*ψ*〉*_{E}* has failed and terminate subsequent processes. That is, if the first syndrome is not all zeros, the receiving node 120 may determine that at least one of the third quantum state |*ψ*〉*_{E}* and the uncorrectable error Eᵤₙ has been tampered with due to an external attack, and terminate the subsequent processes.

If at least one of the third quantum state |*ψ*〉*_{E}* and the uncorrectable error Eᵤₙ is determined to have been tampered with, the receiving node 120 transmits a warning message
to the transmitting node 110 to report an external attack. In this case, the receiving node 120 may transmit the warning message to the transmitting node 110 using either or both of the quantum channel 140 and the classical channel 130.

In contrast, if it is determined that the first verification process is successful, the receiving node 120 transmits a second acknowledgment message Ack2, indicating success of the first verification process, to the transmitting node 110 (S219).

In response to receipt of the second acknowledgment message Ack2, the transmitting node may transmit a permutation operator *P*_{*k*₄} and an encoding operator *U_{MUB}* to the receiving node 120 (S221). Here, the permutation operator *P*_{*k*₄} may be an operator that permutes the qubits of the dummy state |*D*〉, used when encoding the second quantum state |*ψ*〉*_{L}*. In addition, the encoding operator *U_{MUB}* may be an operator used when injecting the dummy state |*D*〉 into the first quantum state |*ψ'*〉, i.e., an operator that encodes zero auxiliary states into mutually unbiased states. In one embodiment, the transmitting node 110 may transmit the permutation operator *P*_{*k*₄} and the encoding operator *U_{MUB}* to the receiving node 120 via the classical channel 130.

The receiving node 120 may perform a second verification process on the third quantum state |*ψ*〉_{E} by determining whether the dummy state |*D*〉 included in the third quantum state |*ψ*〉_{E} has been tampered with, using the received permutation operator *P*_{*k*₄} and encoding operator *U_{MUB}* (S223). For example, the receiving node 120 may generate encoded data by encoding the dummy state |*D*〉 using the encoding operator *U_{MUB},* and may generate measurement result data from the dummy state |*D*〉 included in the third quantum state |*ψ*〉*_{E}*. Here, the measurement result data reflects the characteristics of the dummy state |*D*〉. The receiving node 120 may identify the dummy state |*D*〉 in the third quantum state |*ψ*〉*_{E}* using the permutation operator *P*_{*k*₄}, and determine the characteristics of the identified dummy state |*D*〉 using the encoding operator *U_{MUB}*, thereby generating measurement result data reflecting the characteristics of the dummy state |D).

The receiving node 120 may perform the second verification process on the third quantum state |*ψ*〉*_{E}* based on consistency between the encoded data and the measurement result data. For example, if the characteristics of the dummy state |D), included in the measurement result data, completely match the characteristics of the dummy state |D), extracted from the encoded data, it may be determined that the second verification process is successful. Here, the characteristics may be bias-related characteristics.

If the second verification process is determined to have failed, the receiving node 120 may determine that the third quantum state |*ψ*〉*_{E}* has been tampered with through an external attack such as intermediate interception, terminate the subsequent processes, and transmit a warning message to the transmitting node 110.

Conversely, if the second verification process is determined to be successful, the receiving node 120 may determine that the third quantum state |*ψ*〉*_{E}* is normal and proceed with the subsequent processes.

According to this embodiment, it is possible to accurately determine whether an external attack such as intermediate interception or eavesdropping has occurred during quantum communication, thereby enhancing the security of the quantum communication. In addition, by generating a second quantum state including a dummy state for verification, injecting an uncorrectable error into the encoded second quantum state to generate a third quantum state, and performing quantum communication using the third quantum state, it is possible to minimize overhead and enhance security in performing quantum communication.

Furthermore, according to this embodiment, since a quantum channel is verified based on a syndrome, it is possible to prevent a quantum state from being altered through an unstable quantum channel.

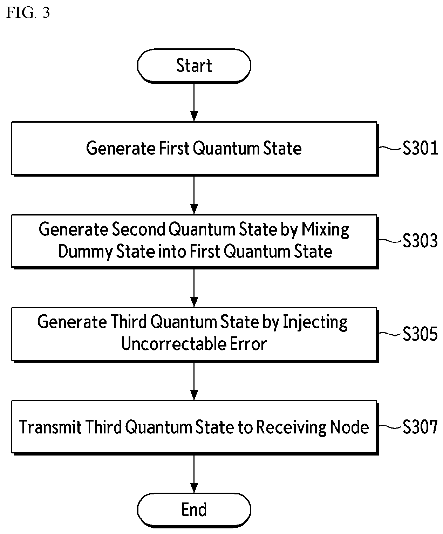

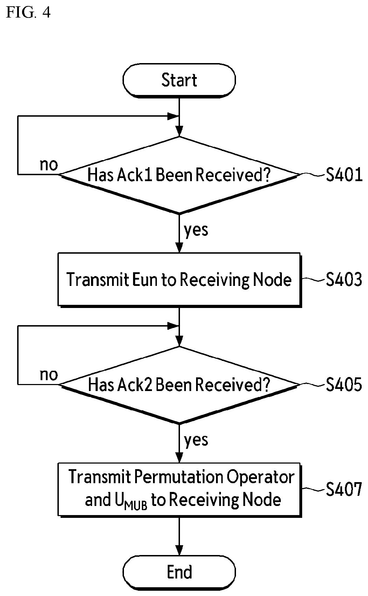

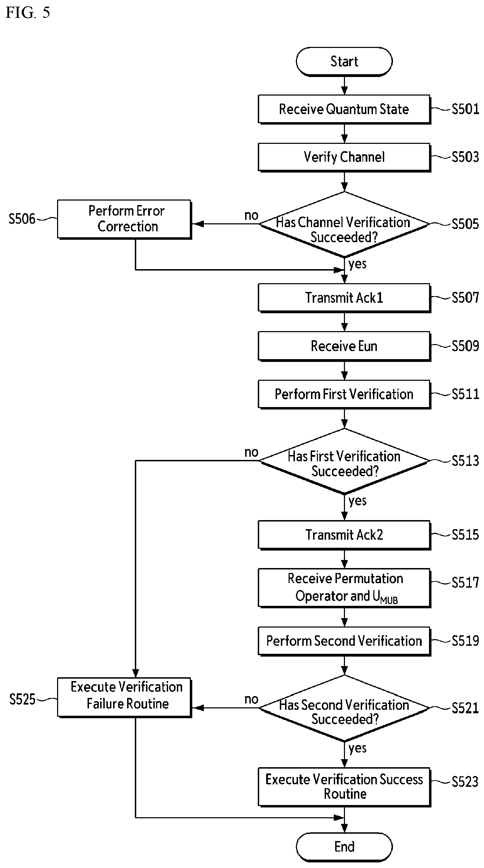

A method in which the transmitting node 110 transmits state information and data to the receiving node 120 will hereinafter be described with reference to FIGS. 3 and 4, and a method in which the receiving node 120 verifies the state information will hereinafter be described with reference to FIG. 5.

Methods according to embodiments to be described below are merely exemplary for achieving the objectives of the present disclosure, and some steps may be added or omitted as needed. In addition, the methods illustrated in FIGS. 3 through 5 may be performed by at least one processor included in a computing device. For convenience of explanation, the methods illustrated in FIGS. 3 and 4 will hereinafter be described as being performed by the transmitting node 110 of FIG. 1, and the method illustrated in FIG. 5 as being performed by the receiving node 120 of FIG. 1.

FIG. 3 is a flowchart for explaining a method in which the transmitting node 110 generates state information and transmits it to the receiving node 120, according to an embodiment of the present disclosure.

Referring to FIG. 3, the transmitting node 110 may determine one or more parameters based on the error rate of the quantum channel 140, and generate a first quantum state using the determined parameters (S301). In one embodiment, the transmitting node 110 may generate arbitrary *k'*-qubit information as a first quantum state |*ψ*'〉. The arbitrary *k'*-qubit information, i.e., the first quantum state |*ψ'*〉, may be expressed by Equation 1 above.

Thereafter, to enhance security, the transmitting node 110 may randomly mix a dummy state |*D*〉 into the first quantum state |*ψ'*〉, thereby generating a second quantum state (S303). In one embodiment, the transmitting node 110 may obtain a dummy state associated with MUBs and randomly mix the obtained dummy state into the first quantum state |*ψ'*〉, thereby generating the second quantum state. In another embodiment, the transmitting node 110 may mix a first group of bits of the dummy state |*D*〉 and a second group of bits of the first quantum state |*ψ'*〉 to randomly mix the dummy state |*D*〉 into the first quantum state, and may thereby generate the second quantum state. For example, the transmitting node 110 may randomly mix a dummy state |*D*〉 of a length of *k - k',* associated with the two state sets {|0〉, |1〉} and {|+〉, |-〉}, into the first quantum state |*ψ'*〉 based on randomly positioned MUBs. The dummy state |*D*〉 may be expressed by Equation 2 above.

Thereafter, the transmitting node 110 encodes the second quantum state and inject an uncorrectable error *Eᵤₙ* into the encoded second quantum state, thereby generating a third quantum state (S305). The transmitting node 110 encodes the second quantum state based on one or more QECC-related parameters, obtains an uncorrectable error *Eᵤₙ*, and injects the obtained uncorrectable error *Eᵤₙ* into the encoded second quantum state based on the QECC-related parameters. For example, the uncorrectable error *Eᵤₙ* may include a Pauli error operator.

Thereafter, the transmitting node 110 transmits the third quantum state to the receiving node 120 (S307). The transmitting node 110 calculates the syndrome of the uncorrectable error *Eᵤₙ* and transmits the calculated syndrome to the receiving node 120. The transmitting node 110 transmits the calculated syndrome to the receiving node 120 via the classical channel 130 and transmits the third quantum state via the quantum channel 140.

FIG. 4 is a flowchart for explaining a method in which the transmitting node 110 transmits data for verification to the receiving node 120, according to an embodiment of the present disclosure. The method of FIG. 4 may follow the method of FIG. 3.

Referring to FIG. 4, the transmitting node 110 monitors whether a first acknowledgment message Ack1 is received from the receiving node 120 (S401). Here, the first acknowledgment message Ack1 indicates that the third quantum state |*ψ*〉*_{E}* transmitted by the transmitting node 110 has been successfully received at the receiving node 120.

If the first acknowledgment message Ack1 is received, the transmitting node 110 transmits the uncorrectable error *Eᵤₙ* to the receiving node 120 (S403). At this time, the transmitting node 110 may transmit the uncorrectable error *Eᵤₙ* to the receiving node 120 via the classical channel 130. The receiving node 120 performs a first verification process on the third quantum state |*ψ*〉*_{E}* using the uncorrectable error *Eᵤₙ.* Here, the first verification process determines whether the third quantum state |*ψ*〉*_{E}* has been tampered with.

The transmitting node 110 monitors whether a second acknowledgment message Ack2 is received from the receiving node (S405). Here, the second acknowledgment message Ack2 indicates that the first verification process for the third quantum state |*ψ*〉*_{E}* has succeeded.

Then, in response to receipt of the second acknowledgment message Ack2 from the receiving node 120, the transmitting node 110 may transmit, to the receiving node 120, a permutation operator *P*_{*k*₄} and an encoding operator *U_{MUB}* for encoding zero auxiliary states into mutually unbiased states (S407). In this case, the transmitting node 110 may transmit the permutation operator *P*_{*k*₄} and the encoding operator *U_{MUB}* to the receiving node 120 via the classical channel 130.

FIG. 5 is a flowchart for explaining a method for verifying a quantum state at a receiving node according to an embodiment of the present disclosure.

Referring to FIG. 5, the receiving node 120 receives a quantum state from the transmitting node 110 (S501). At this time, the receiving node 120 receives the quantum state from the transmitting node 110 via the quantum channel 140. Here, the quantum state is a third quantum state |*ψ*〉*_{E}* described above. The receiving node 120 receives a syndrome s from the transmitting node 110. The receiving node 120 receives the syndrome s from the transmitting node 110 via the classical channel 130.

Thereafter, the receiving node 120 extracts a syndrome from the quantum state and performs a channel verification process by determining whether the extracted syndrome matches the received syndrome (S503). Here, the channel subject to the channel verification process may refer to the quantum channel 140.

The receiving node 120 determines whether the channel verification process has succeeded (S505). If the syndrome extracted from the third quantum state is determined not to match the received syndrome s, the receiving node 120 determines that the channel is abnormal. If the quantum channel 140 is determined to be abnormal, the receiving node 120 performs an error correction process on the third quantum state |*ψ*〉*_{E}* based on the syndrome s received from the transmitting node 110 via the classical channel 130 (S506).

If the error correction process has succeeded or the quantum channel 140 is determined to be normal, the receiving node 120 transmits a first acknowledgment message Ack1 to the transmitting node 110 (S507).

In response to the transmission of the first acknowledgment message Ack1, the receiving node 120 receives an uncorrectable error *Eᵤₙ* from the transmitting node 110 (S509).
In one embodiment, the uncorrectable error *Eᵤₙ* may include a Pauli error operator.

Thereafter, the receiving node 120 performs a first verification process on the quantum state using the received syndrome s (S511). Specifically, the receiving node 120 obtains a first syndrome by applying the received uncorrectable error *Eᵤₙ* to the quantum state, and performs the first verification process by determining whether the obtained first syndrome matches a predetermined second syndrome. In one embodiment, the predetermined second syndrome may be an all-zero syndrome. In this case, if the obtained first syndrome is an all-zero syndrome (i.e., the second syndrome), the receiving node 120 may determine that the first verification process has succeeded.

If the first verification process has succeeded (S513), the receiving node 120 transmits a second acknowledgment message Ack2 to the transmitting node 110, indicating success of the first verification process (S515).

Thereafter, the receiving node 120 may receive a permutation operator *P*_{*k*₄} and an encoding operator *U_{MUB}* for encoding zero auxiliary states into mutually unbiased states from the transmitting node 110 (S517).

Thereafter, the receiving node 120 may perform a second verification process on a dummy state included in the quantum state using the permutation operator *P*_{*k*₄} and the encoding operator *U_{MUB}* (S519). For example, the receiving node 120 may generate encoded data by performing encoding on a dummy state |*D*〉 included in the third quantum state |*ψ*〉*_{E}* using the encoding operator *U_{MUB}*, and generate measurement result data from the dummy state |*D*〉. Here, the measurement result data reflects the characteristics of the dummy state |*D*〉. The receiving node 120 may identify the dummy state |*D*〉 in the third quantum state |*ψ*〉*_{E}* using the permutation operator *P*_{*k*₄}, and determine the characteristics of the identified dummy state |*D*〉 using the encoding operator *U_{MUB},* thereby generating measurement result data reflecting the characteristics of the dummy state |D).

The receiving node 120 may perform the second verification process on the third quantum state |*ψ*〉*_{E}* based on the consistency between the encoded data and the measurement result data. For example, if the characteristics of the dummy state included in the measurement result data match all characteristics of the dummy state extracted from the encoded data, the second verification process may be determined to be successful.

If both the first and second verification processes have succeeded (S521), the receiving node 120 may proceed with verification success processing and then proceed with a verification success routine (S523). For example, the verification success routine may include transmitting the quantum state to another node, transmitting specific data to another node, or executing a predefined program.

If any of the channel verification, first verification, and second verification processes has failed, the receiving node 120 may proceed with a verification failure routine (S525). For example, the verification failure routine may include transmitting an alarm message to a nearby node indicating an external attack, sending a message indicating that the quantum channel 140 is unstable, stopping data transmission and reception through the quantum channel 140, or executing a predefined security-related program.

Meanwhile, one or more nodes may operate as relay nodes to transmit the quantum state to a distant node.

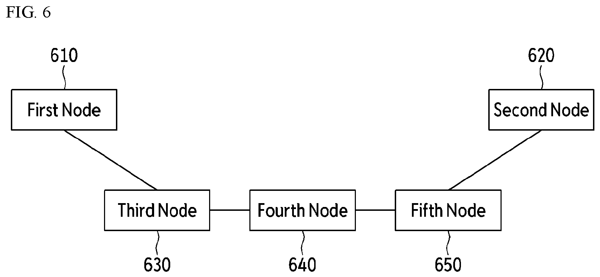

FIG. 6 is a diagram illustrating a quantum communication system for long-distance transmission according to an embodiment of the present disclosure.

Referring to FIG. 6, the quantum communication system may include a plurality of first, second, third, fourth, and fifth nodes 610, 620, 630, 640, and 650. Some of the first, second, third, fourth, and fifth nodes 610, 620, 630, 640, and 650 may operate as relay nodes for relaying quantum states.

At least one of a classical channel and a quantum channel are created between each pair of nodes among the first, second, third, fourth, and fifth nodes 610, 620, 630, 640, and 650. In some embodiments, not covered by the claims, only a classical channel may be created between the first and second nodes 610 and 620, and no quantum channel may be created between the first and second nodes 610 and 620. In this case, the third, fourth, and fifth nodes 630, 640, and 650 may operate as relay nodes to transmit a quantum state to the second node 620. The solid lines in FIG. 6 illustrate a quantum channel, and a classical channel may be created among all the first, second, third, fourth, and fifth nodes 610, 620, 630, 640, and 650.

The third, fourth, and fifth nodes 630, 640, and 650 that perform the function of relay nodes may relay a quantum state to a long-distance destination. Additionally, the third, fourth, and fifth nodes 630, 640, and 650 may perform an error correction process on a quantum state.

In FIG. 6, the first node 610 is a transmitting node that transmits a quantum state, the second node 620 is a destination node that receives the quantum state, and the third,
fourth, and fifth nodes 630, 640, and 650 may operate as relay nodes. The number of relay nodes depicted in FIG. 6 is merely exemplary, and the number of relay nodes may vary.

In this case, the first node 610 may generate a quantum state (i.e., a third quantum state described above with reference to FIG. 2) and transmit the quantum state to the third node 630. In addition, the first node 610 may broadcast a syndrome to all the other nodes, i.e., the second, third, fourth, and fifth nodes 620, 630, 640, and 650, via the classical channel.

The third node 630 may perform a verification process on the quantum channel using the broadcast syndrome and perform an error correction process on the quantum state based on the syndrome.

Then, the third node 630 may transmit the quantum state to the fourth node 640, and the fourth node 640 may perform a verification process on the quantum channel and, if needed, an error correction process on the quantum state based on the syndrome.

The fourth node 640 may transmit the quantum state to the fifth node 650, and the fifth node 650 may perform a verification process on the quantum channel and, if needed, an error correction process on the quantum state before forwarding the quantum state to the second node 620.

If the verification or error correction process for the quantum channel has succeeded, the second node 620, which is a receiving node, may transmit a first acknowledgment message Ack1 to the first node 610 via the classical channel.

In this case, the first node 610 may transmit an uncorrectable error *Eᵤₙ* to the second node 620 via the classical channel.

Thereafter, the second node 620 may perform a first verification process on the quantum state using the uncorrectable error *Eᵤₙ,* and if successful, may transmit a second acknowledgment message Ack2 to the first node 610 via the classical channel.

Thereafter, in response to the second acknowledgment message Ack2, the first node 610 may transmit a permutation operator *P*_{*k*₄} and an encoding operator *U_{MUB}* to the second node 620 via the classical channel.

The second node 620 may perform a second verification process on the dummy state included in the quantum state using the permutation operator *P*_{*k*₄} and the encoding operator *U_{MUB}.* If both the first and second verification processes have succeeded, the second node 620 may proceed with a predefined follow-up process. On the other hand, if either the first or second verification process has failed, the second node 620 may not proceed with the predefined follow-up process.

As described above, quantum states can be transmitted to distant nodes with reduced overhead. In addition, by performing, at each node, verification on both the node that has transmitted quantum states and the channel used, the quality of quantum communication can be improved.

Hereinafter, a hardware configuration of an exemplary computing system according to some embodiments will be described with reference to FIG. 7. The computing system described with reference to FIG. 7 may refer to the transmitting node and/or receiving node described above.

FIG. 7 is a hardware configuration view of an exemplary computing system 1000 according to some embodiments of the present disclosure.

The computing system 1000 may include at least one processor 1100, a bus 1600, a communication interface 1200, a memory 1400, which loads a computer program 1500 to be executed by the processor 1100, and a storage 1300, which stores the computer program 1500. Only components related to the embodiment are illustrated in FIG. 7. Accordingly, a person skilled in the art may recognize that other general components may be included in addition to the components illustrated in FIG. 7.

The processor 1100 may control the overall operation of each of the components of the computing system 1000. The processor 1100 may be configured to include at least one of a central processing unit (CPU), a micro-processor unit (MPU), a micro-controller unit (MCU), a graphics processing unit (GPU), or any form of processor well-known in the field of the present disclosure. Additionally, the processor 1100 may perform computations for at least one application or program to execute operations/methods according to some embodiments of the present disclosure. The computing system 1000 may be equipped with one or more processors.

The memory 1400 may store various data, commands, and/or information. The memory 1400 may load the computer program 1500 from the storage 1300 to execute the operations/methods according to some embodiments of the present disclosure. The memory 1400 may be implemented as a volatile memory such as a random-access memory (RAM), but the present disclosure is not limited thereto.

The bus 1600 may provide communication functionality between the components of the computing system 1000. The bus 1600 may be implemented in various forms such as an address bus, a data bus, and a control bus. The communication interface 1200 may be connected to a communication network. The storage 1300 may non-transitorily store at least one computer program 1500. The storage 1300 may be configured to include a non-volatile memory such as a flash memory, as well as a computer-readable recording medium in any form well-known in the technical field of the present disclosure, such as a hard disk or a removable disk.

The computer program 1500 may include one or more instructions that enable the processor 1100 to perform the operations/methods according to various embodiments of the present disclosure when loaded into the memory 1400. In other words, by executing the loaded instructions, the processor 1100 may perform the operations/methods according to various embodiments of the present disclosure. The computer program 1500 may include instructions for methods according to various embodiments described with reference to FIGS. 1 to 6.

According to one embodiment, the computer program 1500 may include instructions for operations of generating a second quantum state using a first quantum state and a dummy state, encoding the second quantum state, generating a third quantum state by injecting an uncorrectable error into the encoded second quantum state and transmitting the third quantum state to a receiving node.

Additionally or alternatively, the computer program 1500 may include instructions for operations of receiving a quantum state from a transmitting node, receiving an uncorrectable error from the transmitting node, obtaining a first syndrome by applying the uncorrectable error to the quantum state and performing a first verification process on the quantum state by determining whether the obtained first syndrome matches a predetermined second syndrome.

In some embodiments, the computing system 1000 as described with reference to FIG. 7 may be configured using one or more physical servers included in a server farm based on cloud technology such as virtual machines. In this case, at least some of the components as illustrated in FIG. 7, such as the processor 1100, the memory 1400, and the storage 1300 may be virtual hardware, and the communication interface 1200 may also be embodied as a virtualized networking element such as a virtual switch.

So far, a variety of embodiments of the present disclosure and the effects according to embodiments thereof have been mentioned with reference to FIGS. 1 to 7. The effects according to the technical idea of the present disclosure are not limited to the forementioned effects, and other unmentioned effects may be clearly understood by those skilled in the art from the description of the specification.

The methods according to the embodiments of the present disclosure described above may be performed by executing a computer program implemented using a computer-readable code. The computer program may be transmitted from a first computing device to a second computing device via a network such as the Internet and installed on the second computing device, and may be used by the second computing device. Furthermore, although the operations are illustrated in a specific order in the drawings, it should not be understood that the operations should be executed in the specific order as illustrated or in a sequential order or that all illustrated operations should be executed to acquire a desired result. In certain situations, multitasking and parallel processing may be advantageous.

Although some embodiments of the present disclosure have been described above with reference to the accompanying drawings, the present disclosure may not be limited to some embodiments and may be implemented in various different forms. Those of ordinary skill in the technical field to which the present disclosure belongs will be able to appreciate that the present disclosure may be implemented in other specific forms without departing from the scope of protection defined by the claims. Therefore, it should be understood that some embodiments as described above are not restrictive but illustrative in all respects.

## Claims

1. A method for transmitting a quantum state in a quantum communication system comprising a transmitting node (110), a receiving node (120) and a plurality of communication channels formed between the transmitting node (110) and the receiving node (120), performed by a computing device as the transmitting node, wherein the plurality of communication channels comprises a verified classical channel (130) and a noisy quantum channel (140), the method comprising:
transmitting data necessary for quantum state verification to the receiving node (120);
generating a second quantum state using a first quantum state and a dummy state;
encoding the second quantum state based on one or more Quantum Error Correction Code, QECC, related parameters;
obtaining an uncorrectable error;
generating a third quantum state by injecting the obtained uncorrectable error into the encoded second quantum state based on the one or more QECC-related parameters;
obtaining a syndrome of the uncorrectable error;
transmitting the syndrome to the receiving node (120) via the classical channel (130);
transmitting the third quantum state to the receiving node (120) via the quantum channel (140);
in response to receiving, from the receiving node (120), a first acknowledgment message related to a successful reception of the third quantum state, transmitting the uncorrectable error to the receiving node (120) in response to determining by the receiving node (120) that the quantum channel is normal or, if abnormal, that an error correction is successfully performed on the third quantum state by the receiving node (120) based on the received syndrome; and
in response to determining by the receiving node (120) that both the third quantum state and the uncorrectable error are not tampered with, receiving a second acknowledgment message indicating success, else a warning message to report an external attack.

2. The method of claim 1, wherein the generating of the second quantum state comprises: obtaining a dummy state associated with mutually unbiased bases; and generating the second quantum state by randomly mixing the obtained dummy state into the first quantum state.

3. The method of any of the preceding claims, further comprising:
after the transmitting of the uncorrectable error to the receiving node (120), transmitting a permutation operator and an encoding operator for encoding zero auxiliary states into mutually unbiased states to the receiving node (120) in response to receiving, from the receiving node (120), the second acknowledgment message related to a successful verification of the third quantum state.

4. A method for verifying a quantum state in a quantum communication system comprising a transmitting node (110), a receiving node (120) and a plurality of communication channels formed between the transmitting node (110) and the receiving node (120), performed by a computing device as the receiving node, wherein the plurality of communication channels comprises a verified classical channel (130) and a noisy quantum channel (140), the method comprising:
receiving data necessary for quantum state verification;
receiving the quantum state from the transmitting node (110) via the quantum channel (140);
receiving a syndrome from the transmitting node (110) via the classical channel (130); and
verifying the quantum channel (140) based on whether a syndrome extracted from the quantum state matches the received syndrome;
receiving an uncorrectable error from the transmitting node (110), wherein the receiving of the uncorrectable error comprises: in response to a successful verification of the quantum channel (140), transmitting, to the transmitting node (110), a first acknowledgment message indicating that the quantum state has been successfully received; and receiving the uncorrectable error from the transmitting node (110) in response to the transmission of the first acknowledgment message;
obtaining a first syndrome by applying the uncorrectable error to the quantum state;
performing a first verification process on the quantum state by determining whether the obtained first syndrome matches a predetermined second syndrome; and
in response to determining that both the quantum state and the uncorrectable error are not tampered with, transmitting to the transmitting node a second acknowledgement message indicating success, else a warning message to report an external attack.

5. The method of claim 4, wherein
the predetermined second syndrome is an all-zero syndrome including zero bits, and
the performing of the first verification process on the quantum state comprises determining that the first verification has succeeded when the obtained first syndrome is the all-zero syndrome.

6. The method of claim 4, further comprising: in response to a successful first verification process, receiving, from the transmitting node (110), a permutation operator and an encoding operator for encoding zero auxiliary states into mutually unbiased states; and performing a second verification process on a dummy state included in the quantum state based on the permutation operator and the encoding operator.

7. The method of claim 6, comprising receiving the permutation operator and the encoding operator via the classical channel (130).

8. The method of claim 4, wherein the quantum state is transmitted from the transmitting node (110) to the computing device via one or more relay nodes.

## Patentansprüche

1. Verfahren zum Übertragen eines Quantenzustands in einem Quantenkommunikationssystem, umfassend einen Sendeknoten (110), einen Empfangsknoten (120) und mehrere Kommunikationskanäle, die zwischen dem Sendeknoten (110) und dem Empfangsknoten (120) gebildet sind, durchgeführt durch eine Rechenvorrichtung als dem Sendeknoten, wobei die mehreren Kommunikationskanäle einen verifizierten klassischen Kanal (130) und einen rauschbehafteten Quantenkanal (140) umfassen, wobei das Verfahren Folgendes umfasst:
Übertragen von Daten, die zur Verifizierung des Quantenzustands notwendig sind, an den Empfangsknoten (120);
Erzeugen eines zweiten Quantenzustands unter Verwendung eines ersten Quantenzustands und eines Dummy-Zustands;
Codieren des zweiten Quantenzustands basierend auf einem oder mehreren Quantenfehlerkorrekturcode(Quantum Error Correction Code - QECC)-bezogenen Parametern;
Erhalten eines unkorrigierbaren Fehlers;
Erzeugen eines dritten Quantenzustands durch Injizieren des erhaltenen unkorrigierbaren Fehlers in den codierten zweiten Quantenzustand basierend auf dem einen oder den mehreren QECC-bezogenen Parametern;
Erhalten eines Syndroms des unkorrigierbaren Fehlers;
Übertragen des Syndroms an den Empfangsknoten (120) über den klassischen Kanal (130);
Übertragen des dritten Quantenzustands an den Empfangsknoten (120) über den Quantenkanal (140);
als Reaktion auf Empfangen, von dem Empfangsknoten (120), einer ersten Bestätigungsnachricht bezogen auf einen erfolgreichen Empfang des dritten Quantenzustands, Übertragen des unkorrigierbaren Fehlers an den Empfangsknoten (120) als Reaktion auf Bestimmen, durch den Empfangsknoten (120), dass der Quantenkanal normal ist, oder, falls anomal, dass eine Fehlerkorrektur erfolgreich an dem dritten Quantenzustand durch den Empfangsknoten (120) basierend auf dem empfangenen Syndrom durchgeführt wurde; und
als Reaktion auf Bestimmen, durch den Empfangsknoten (120), dass sowohl der dritte Quantenzustand als auch der unkorrigierbare Fehler nicht manipuliert sind, Empfangen einer zweiten Bestätigungsnachricht, die einen Erfolg angibt, anderenfalls einer Warnmeldung, um einen externen Angriff zu melden.

2. Verfahren nach Anspruch 1, wobei das Erzeugen des zweiten Quantenzustands Folgendes umfasst: Erhalten eines Dummy-Zustands, der mit gegenseitig unvoreingenommenen Basen assoziiert ist; und Erzeugen des zweiten Quantenzustands durch zufälliges Mischen des erhaltenen Dummy-Zustands in den ersten Quantenzustand.

3. Verfahren nach einem der vorhergehenden Ansprüche, ferner umfassend:
nach dem Übertragen des unkorrigierbaren Fehlers an den Empfangsknoten (120), Übertragen eines Permutationsoperators und eines Codierungsoperators zum Codieren von Hilfszuständen im Basiszustand Null in gegenseitig unvoreingenommene Zustände an den Empfangsknoten (120) als Reaktion auf das Empfangen, von dem Empfangsknoten (120), der zweiten Bestätigungsnachricht bezogen auf eine erfolgreiche Verifizierung des dritten Quantenzustands.

4. Verfahren zum Verifizieren eines Quantenzustands in einem Quantenkommunikationssystem, umfassend einen Sendeknoten (110), einen Empfangsknoten (120) und mehrere Kommunikationskanäle, die zwischen dem Sendeknoten (110) und dem Empfangsknoten (120) gebildet sind, durchgeführt durch eine Rechenvorrichtung als dem Empfangsknoten, wobei die mehreren Kommunikationskanäle einen verifizierten klassischen Kanal (130) und einen rauschbehafteten Quantenkanal (140) umfassen, wobei das Verfahren Folgendes umfasst:
Empfangen von Daten, die notwendig zur Verifizierung des Quantenzustands sind;
Empfangen des Quantenzustands von dem Sendeknoten (110) über den Quantenkanal (140);
Empfangen eines Syndroms von dem Sendeknoten (110) über den klassischen Kanal (130); und
Verifizieren des Quantenkanals (140) basierend darauf, ob ein Syndrom, das aus dem Quantenzustand extrahiert wurde, mit dem empfangenen Syndrom übereinstimmt;
Empfangen eines unkorrigierbaren Fehlers von dem Sendeknoten (110), wobei das Empfangen des unkorrigierbaren Fehlers Folgendes umfasst: als Reaktion auf eine erfolgreiche Verifizierung des Quantenkanals (140), Übertragen, an den Sendeknoten (110), einer ersten Bestätigungsnachricht, die angibt, dass der Quantenzustand erfolgreich empfangen wurde; und Empfangen des unkorrigierbaren Fehlers von dem Sendeknoten (110) als Reaktion auf die Übertragung der ersten Bestätigungsnachricht;
Erhalten eines ersten Syndroms durch Anwenden des unkorrigierbaren Fehlers auf den Quantenzustand;
Durchführen eines ersten Verifizierungsprozesses an dem Quantenzustand durch Bestimmen, ob das erhaltene erste Syndrom mit einem vorgegebenen zweiten Syndrom übereinstimmt, und
als Reaktion auf Bestimmen, dass sowohl der Quantenzustand als auch der unkorrigierbare Fehler nicht manipuliert sind, Übertragen, an den Sendeknoten, einer zweiten Bestätigungsnachricht, die einen Erfolg angibt, anderenfalls einer Warnmeldung, um einen externen Angriff zu melden.

5. Verfahren nach Anspruch 4, wobei
das vorgegebene zweite Syndrom ein Alles-Null-Syndrom ist, das null Bits beinhaltet, und
das Durchführen des ersten Verifizierungsprozesses an dem Quantenzustand Bestimmen, dass die erste Verifizierung erfolgreich ist, wenn das erhaltene erste Syndrom das Alles-Null-Syndrom ist, umfasst.

6. Verfahren nach Anspruch 4, ferner umfassend: als Reaktion auf einen erfolgreichen ersten Verifizierungsprozess, Empfangen, von dem Sendeknoten (110), eines Permutationsoperators und eines Codierungsoperators zum Codieren von Hilfszuständen im Basiszustand Null in gegenseitig unvoreingenommene Zustände; und Durchführen eines zweiten Verifizierungsprozesses an einem Dummy-Zustand, der in dem Quantenzustand beinhaltet ist, basierend auf dem Permutationsoperator und dem Codierungsoperator.

7. Verfahren nach Anspruch 6, umfassend Empfangen des Permutationsoperators und des Codierungsoperators über den klassischen Kanal (130).

8. Verfahren nach Anspruch 4, wobei der Quantenzustand von dem Sendeknoten (110) an die Rechenvorrichtung über einen oder mehrere Relaisknoten übertragen wird.

## Revendications

1. Procédé de transmission d'un état quantique dans un système de communication quantique comprenant un nœud d'émission (110), un nœud de réception (120) et une pluralité de canaux de communication formés entre le nœud d'émission (110) et le nœud de réception (120), le procédé étant exécuté par un dispositif informatique en tant que nœud d'émission,
où la pluralité de canaux de communication comprend un canal classique vérifié (130) et un canal quantique bruité (140), le procédé comprenant les étapes suivantes :
transmettre les données nécessaires à la vérification de l'état quantique au nœud de réception (120) ;
générer un deuxième état quantique à l'aide d'un premier état quantique et d'un état fictif ;
coder le deuxième état quantique sur la base d'un ou plusieurs paramètres liés à un code de correction d'erreur quantique, QECC ;
obtenir une erreur non corrigible ;
générer un troisième état quantique en injectant l'erreur non corrigible obtenue dans le deuxième état quantique codé à partir du ou des paramètres liés à un QECC ;
obtenir un syndrome de l'erreur non corrigible ;
transmettre le syndrome au nœud de réception (120) par l'intermédiaire du canal classique (130) ;
transmettre le troisième état quantique au nœud de réception (120) par l'intermédiaire du canal quantique (140) ;
en réponse à la réception, en provenance du nœud de réception (120), d'un premier message d'accusé de réception lié à une réception réussie du troisième état quantique, transmettre l'erreur non corrigible au nœud de réception (120) en réponse à la détermination par le nœud de réception (120) que le canal quantique est normal ou, s'il est anormal, qu'une correction d'erreur a été effectuée avec succès sur le troisième état quantique par le nœud de réception (120) sur la base du syndrome reçu ; et
en réponse à la détermination par le nœud de réception (120) qu'à la fois le troisième état quantique et l'erreur non corrigible ne sont pas falsifiés, recevoir un deuxième message d'accusé de réception indiquant le succès, sinon un message d'avertissement signalant une attaque externe.

2. Procédé selon la revendication 1, dans lequel la génération du deuxième état quantique comprend les étapes suivantes : obtenir un état fictif associé à des bases mutuellement non polarisées ; et générer le deuxième état quantique en mélangeant aléatoirement l'état fictif obtenu dans le premier état quantique.

3. Procédé selon l'une quelconque des revendications précédentes, comprenant en outre les étapes suivantes :
après la transmission de l'erreur non corrigible au nœud de réception (120), transmettre au nœud de réception (120) un opérateur de permutation et un opérateur de codage pour coder des états auxiliaires zéro en états mutuellement non polarisés en réponse à la réception, en provenance du nœud de réception (120), du deuxième message d'accusé de réception lié à une vérification réussie du troisième état quantique.

4. Procédé de vérification d'un état quantique dans un système de communication quantique comprenant un nœud d'émission (110), un nœud de réception (120) et une pluralité de canaux de communication formés entre le nœud d'émission (110) et le nœud de réception (120), le procédé étant exécuté par un dispositif informatique en tant que nœud de réception,
où la pluralité de canaux de communication comprend un canal classique vérifié (130) et un canal quantique bruité (140), le procédé comprenant les étapes suivantes :
recevoir les données nécessaires à la vérification de l'état quantique ;
recevoir l'état quantique en provenance du nœud d'émission (110) par l'intermédiaire du canal quantique (140) ;
recevoir un syndrome en provenance du nœud d'émission (110) par l'intermédiaire du canal classique (130) ; et vérifier le canal quantique (140) sur la base du fait qu'un syndrome extrait de l'état quantique corresponde, ou non, au syndrome reçu ;
recevoir une erreur non corrigible en provenance du nœud d'émission (110), la réception de l'erreur non corrigible comprenant les étapes suivantes : en réponse à une vérification réussie du canal quantique (140), transmettre au nœud d'émission (110) un premier message d'accusé de réception indiquant que l'état quantique a été reçu avec succès ; et recevoir l'erreur non corrigible en provenance du nœud d'émission (110) en réponse à la transmission du premier message d'accusé de réception ;
obtenir un premier syndrome en appliquant l'erreur non corrigible à l'état quantique ;
exécuter un premier processus de vérification de l'état quantique en déterminant si le premier syndrome obtenu correspond à un deuxième syndrome prédéterminé ; et
en réponse à la détermination qu'à la fois l'état quantique et l'erreur non corrigible ne sont pas falsifiés, transmettre au nœud d'émission un deuxième message d'accusé de réception indiquant le succès, sinon un message d'avertissement signalant une attaque externe.

5. Procédé selon la revendication 4, dans lequel
le deuxième syndrome prédéterminé est un syndrome tout zéro comprenant des bits nuls, et
la réalisation du premier processus de vérification de l'état quantique comprend de déterminer que la première vérification a réussi lorsque le premier syndrome obtenu est le syndrome tout zéro.

6. Procédé selon la revendication 4, comprenant en outre les étapes suivantes : en réponse à un premier processus de vérification réussi, recevoir, en provenance du nœud d'émission (110), un opérateur de permutation et un opérateur de codage pour coder des états auxiliaires nuls dans des états mutuellement non polarisés ; et exécuter un deuxième processus de vérification sur un état fictif inclus dans l'état quantique sur la base de l'opérateur de permutation et de l'opérateur de codage.

7. Procédé selon la revendication 6, comprenant de recevoir l'opérateur de permutation et l'opérateur de codage par l'intermédiaire du canal classique (130).

8. Procédé selon la revendication 4, dans lequel l'état quantique est transmis depuis le nœud d'émission (110) au dispositif informatique par l'intermédiaire d'un ou plusieurs nœuds relais.
